# EUROPÄISCHE PATENTSCHRIFT

(11) **EP 2 110 646 B1**
(45) Veröffentlichungstag und Bekanntmachung des Hinweises auf die Patenterteilung: **13.06.2018**
(21) Anmeldenummer: 09158080.3
(22) Anmeldetag: 16.04.2009
(51) Int. Cl.: G01D 5/353

(54) **Vorrichtung und Verfahren zur Brillouin-Frequenzbereichsanalyse**
Device and method for Brillouin frequency range analysis
Dispositif et procédé d'analyse de zone de fréquence Brillouin

(30) Priorität: 16.04.2008 DE 102008019150
(43) Veröffentlichungstag der Anmeldung: 21.10.2009
(73) Patentinhaber: BAM Bundesanstalt für Materialforschung und -prüfung, 12205 Berlin (DE)
(72) Erfinder: Nöther, Nils, 10965, Berlin (DE)
(74) Vertreter: Zimmermann & Partner Patentanwälte mbB

(56) Entgegenhaltungen:
- EP-A1- 1 760 424
- EP-A2- 1 879 009
- DE-A1-102006 015 159
- Daniel Dr ET AL: "3 A Low-Cost 100 MHz Vector Network Analyzer with USB Interface", QEX, 31. August 2004 (2004-08-31), XP055086726, Gefunden im Internet: URL:http://www.tapr.org/~n5eg/index_files/ final_QEX_mcdermott.pdf [gefunden am 2013-11-05]
- Professor Dr Thomas C. Baier: "A Low Budget Vector Network Analyzer for AF to UHF", QEX, 30. April 2007 (2007-04-30), XP055086721, Gefunden im Internet: URL:http://sdr-kits.net/DG8SAQ/VNWA/baier_ VNWA10_QEX.pdf [gefunden am 2013-11-05]
- DIETER GARUS ET AL: "Brillouin Optical-Fiber Frequency-Domain Analysis for Distributed Temperature and Strain Measurements", JOURNAL OF LIGHTWAVE TECHNOLOGY, IEEE SERVICE CENTER, NEW YORK, NY, US, Bd. 15, Nr. 4, 1. April 1997 (1997-04-01), XP011028804, ISSN: 0733-8724

## Beschreibung

Die vorliegende Erfindung betrifft eine Vorrichtung zur Brillouin-Frequenzbereichsanalyse sowie ein zugehöriges Verfahren zur Durchführung einer Brillouin-Frequenzbereichsanalyse.

Eine Vorrichtung zur Brillouin-Frequenzbereichsanalyse ist beispielsweise aus der WO 2007/131794 bekannt. Darin wird ein Überwachungssystem beschrieben, das mittels Brillouin-Frequenzbereichsanalyse die Dehnung einer optischen Faser überwacht, um beispielsweise Veränderungen in einem Deich oder einer ähnlichen sicherheitsrelevanten Struktur zu erkennen. Ebenfalls ist eine Vorrichtung zur Brillouin-Frequenzbereichsanalyse aus dem Fachartikel "Brillouin optical-fiber frequency-domain analysis for distributed temperature and strain measurements" von Garus et al., Journal of Lightwave Technology, Bd. 15, Nr. 4, Seiten 654 bis 662, 1997, bekannt. Weiterhin ist eine Vorrichtung zur Brillouin-Frequenzbereichs-analyse aus dem Fachartikel "Distributed fiber-optic frequency-domain Brillouin sensing" von Bernini et al., Sensors and Actuators A: Physical, Vol. 123-124, Eurosensors XVIII 2004 - The 18th European conference on Solid-State Transducers, Seiten 337-342, 2005, bekannt.

Die Autoren Tom McDermott und Karl Ireland beschreiben in QEX, July/August, 2004, Seiten 3 - 14 (www.tapr.org/∼n5eg/index_files/final_QEX_mcdermott.pdf) einen preiswerten 100 MHz Vektor Netzwerk Analysator mit USB Interface. Der Autor Thomas C. Baier, DG8SAQ beschreibt in QEX March/April, 2007, Seiten 46 - 54 (www.sdr-kits.net/DG8SAQ/VNWA/baier_VNWA10_QEX.pdf) einen preiswerten Vektor Netzwerk Analysator für Lang- bis Ultrakurzwelle. EP 1 879 009 A2 beschreibt ein Verfahren zur Analyse des Modulationsspektrums eines Probemodulators, der Licht einer im optischen Bereich liegenden Trägerfrequenz moduliert.

All diesen bekannten Vorrichtungen ist gemein, daß die Auswertung der Messung mittels eines analogen Vektor-Netzwerk-Analysators (VNA) erfolgt. Die analoge Funktionsweise des VNA führt jedoch zu langen Meßzeiten und schlechtem Rauschverhalten, was sich in einer eingeschränkten Dynamik des Systems niederschlägt. Weiterhin ist der als Laborgerät konzipierte VNA nur mäßig feldtauglich und an sich für die zu bewältigende Aufgabe überdimensioniert. Folglich ist der VNA für den geplanten Einsatz zu groß, zu schwer und zu teuer.

In EP 1 760 424 A1 wird ein verteilter faseroptischer Sensor beschrieben.

In DE 10 2006 015 159 A1 wird ein Verfahren und eine Vorrichtung zur räumlich verteilten und/oder entfernten Messung von physikalischen Größen beschrieben.

Im Hinblick auf die oben genannten Nachteile des Standes der Technik ist es daher eine Aufgabe der vorliegenden Erfindung, einer Vorrichtung zur Brillouin-Frequenzbereichsanalyse bereitzustellen, die die genannten Nachteile zumindest teilweise überwindet.

Diese Aufgabe wird gelöst durch eine Vorrichtung zur Brillouin-Frequenzbereichsanalyse gemäß Anspruch 1 sowie durch ein Verfahren zur Brillouin-Frequenzbereichsanalyse gemäß Anspruch 9. Weitere Aspekte, Einzelheiten, Vorteile und Merkmale der vorliegenden Erfindung ergeben sich aus den Unteransprüchen, der Beschreibung sowie den beigefügten Zeichnungen.

Die vorliegende Erfindung betrifft insbesondere eine Vorrichtung, die zur Brillouin-Frequenzbereichsanalyse eingerichtet ist und eine Analyseeinheit zum Ermitteln der komplexen Übertragungsfunktion einer Sensorfaser umfaßt. Dabei weist die Analyseeinheit einen digitalen Meßsignaleingang für ein digitales Meßsignal und einen digitalen Referenzsignaleingang für ein digitales Referenzsignal auf, wobei die Analyseeinheit weiterhin eingerichtet ist, die komplexe Übertragungsfunktion aus dem digitalen Meßsignal und dem digitalen Referenzsignal zu ermitteln.

Durch die digitale Signalauswertung kann die Dynamik des Systems deutlich verbessert werden. Insbesondere kann bei der Signalauswertung auf analoge Filter und Phasen- sowie Amplitudenvergleicher verzichtet werden. Weiterhin kann die Meßdauer verkürzt werden, da das Einschwingen der analogen Filter entfällt. Weiterhin können die digitalen Signale auch offline verarbeitet werden, da auf die Gesetze der analogen Echtzeit-Signalverarbeitung keine Rücksicht genommen werden muß.

Gemäß einer Ausführungsform kann die digitale Auswertung mittels eines PCs oder eines digitalen Signalprozessors (DSP) erfolgen.

Somit entfällt aufgrund der digitalen Verarbeitung die Notwendigkeit, einen VNA einzusetzen, was mit einer erheblichen Reduzierung von Kosten und Gewicht des Systems verbunden ist.

Gemäß einer weiteren Ausführungsform kann das Referenzsignal durch direkte digitale Synthese erzeugt werden. Das Referenzsignal kann somit direkt von einer digitalen Signalquelle bezogen werden, weshalb auf die in herkömmlichen Systemen auf der Pumpseite vorhandene Photodiode verzichtet werden kann. Dies bringt eine weitere Ersparnis in Gewicht, Kosten und Stromverbrauch mit sich.

Gemäß einer weiteren Ausführungsform kann ein Zirkulator zum Auskoppeln eines optischen Meßsignals aus der Sensorfaser bereitgestellt werden.

Durch die Verwendung eines Zirkulators, der die gesamte Leistung des rückgestreuten Lichts zum Photodetektor führt, anstatt eines optischen Kopplers kann die Dynamik des Systems verbessert werden.

Anhand der beigefügten Zeichnungen werden nun Ausführungsbeispiele der vorliegenden Erfindung erläutert. Dabei zeigt:
- Fig. 1: eine Vorrichtung gemäß einem Ausführungsbeispiel der vorliegenden Erfindung;
- Fig. 2: eine Vorrichtung gemäß einem weiteren Ausführungsbeispiel der vorliegenden Erfindung;
- Fig. 3: eine schematische Darstellung der stimulierten Brillouinstreuung mit periodisch modulierter Pumpwelle;
- Fig. 4: das Ergebnis einer Dehnungsmessung an einer optischen Faser mit definierter Vordehnung;
- Fig. 5: die Poincare-Sphäre mit Kreisen, entlang derer die Polarisationszustände des Stokesstrahls rotiert werden;
- Fig. 6: einen jeweiligen Vergleich von Messungen mit einem festen Polarisationszustand sowie zwei gemittelten Polarisationszuständen mit verwürfelten Polarisationszuständen;
- Fig. 7: eine Messung des Brillouinspektrums an einer 2250 m langen Faser bei verschiedenen Modulationsfrequenzen;
- Fig. 8: einen Vergleich einer analogen Messung und einer digitalen Verarbeitung.

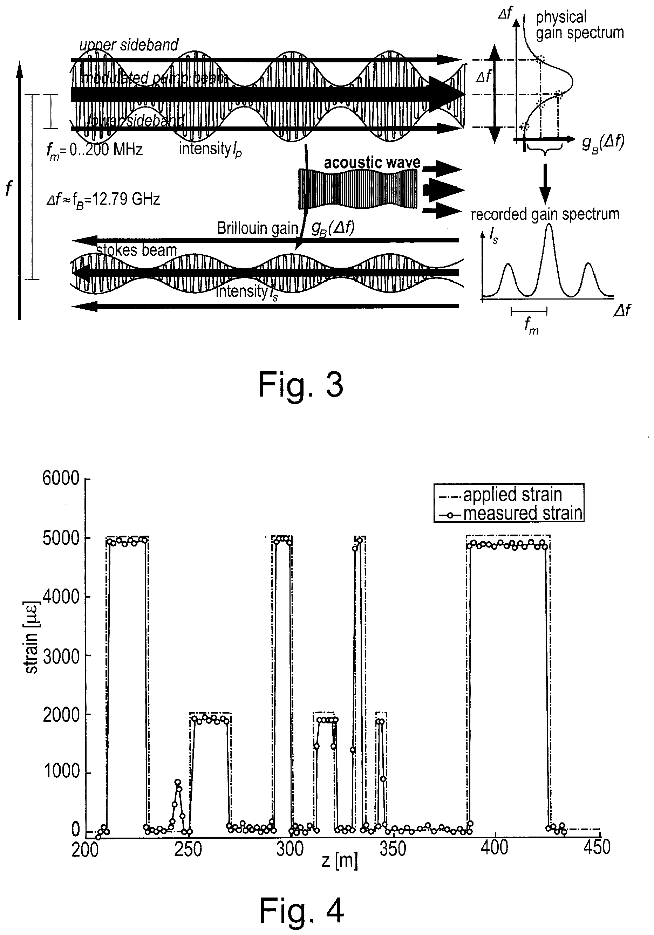

Bevor die Ausführungsformen der vorliegenden Erfindung genauer beschrieben werden, soll anhand der Fig. 3 das Prinzip der Brillouin-Frequenzbereichsanalyse kurz dargestellt werden. Dazu zeigt Fig. 3 eine schematische Darstellung der stimulierten Brillouinstreuung mit periodisch modulierter Pumpwelle. Dabei repräsentiert die obere Welle den Pumpstrahl, der von einem Pumplaser bereitgestellt wird, und in ein Ende eines Wellenleiters eingespeist wird. Die untere Welle repräsentiert einen Stokesstrahl, der von einem Stokeslaser bereitgestellt wird, und in ein entgegengesetztes Ende des Wellenleiters eingespeist wird. In Fig. 3 zeigen die entsprechenden Pfeile an, daß die Ausbreitungsrichtungen des Pumpstrahls und des Stokesstrahls einander entgegengesetzt sind. Weiterhin weisen der Pumpstrahl und der Stokesstrahl verschiedene Frequenzen auf, wobei der Frequenzunterschied Δf zwischen Pump- und Stokesstrahl so gewählt ist, daß er im Bereich akustischer Phononen, beispielsweise 12,79 GHz, des optischen Leiters liegt. Auf diese Weise wird die in Fig. 3 dargestellte akustische Welle im optischen Leiter angeregt, die die Pumpwelle und die Stokeswelle miteinander koppelt. Durch diese Kopplung wird die Pumpwelle gedämpft während die Stokeswelle verstärkt wird. Die entsprechende Verstärkung g_{B} hängt von dem Frequenzunterschied Δf ab, wobei die Abhängigkeit eine Lorentz-Charakteristik aufweist und auf der rechten Seite von Fig. 3 dargestellt ist.

Zur Durchführung der Frequenzbereichsanalyse wird ein Frequenzunterschied Δf zwischen dem Pumpstrahl und dem Stokesstrahl eingestellt. Dabei wird die Verstärkung der Stokeswelle g_{B} gemessen. Der Freqenzunterschied Δf wird nun durchgestimmt, um den Bereich der Brillouinverstärkung g_{B} abzutasten. Auf diese Weise kann das Maximum der Lorentzkurve gefunden und die Brillouinfrequenz f_{B} bestimmt werden. Um die örtliche Information über die Verteilung der Brillouinverstärkung g_{B} entlang der Sensorfaser zu erhalten, wird der Pumpstrahl mit einem Referenzsignal der Frequenz fₘ moduliert. Dabei wird fₘ für jeden Frequenzunterschied Δf in einem Bereich von 100 kHz bis 30 MHz durchgestimmt. Aus dem Vergleich des Referenzsignals mit dem rückgestreuten Meßsignal nach Betrag und Phase läßt sich für jeden Frequenzunterschied Δf der ortsaufgelöste Verlauf der Brillouinverstärkung g_{B} entlang der Sensorfaser ermitteln. Bekanntermaßen weist die Brillouinfrequenz f_{B} eine ausgeprägte Dehnungsabhängigkeit auf, wobei eine Verschiebung der Brillouinfrequenz f_{B} um ungefähr 501.2 MHz pro 1% Faserdehnung auftritt. Auf diese Weise läßt sich aus der Verschiebung der Brillouinfrequenz f_{B} das Dehnungsprofil der Faser ortsaufgelöst ermitteln.

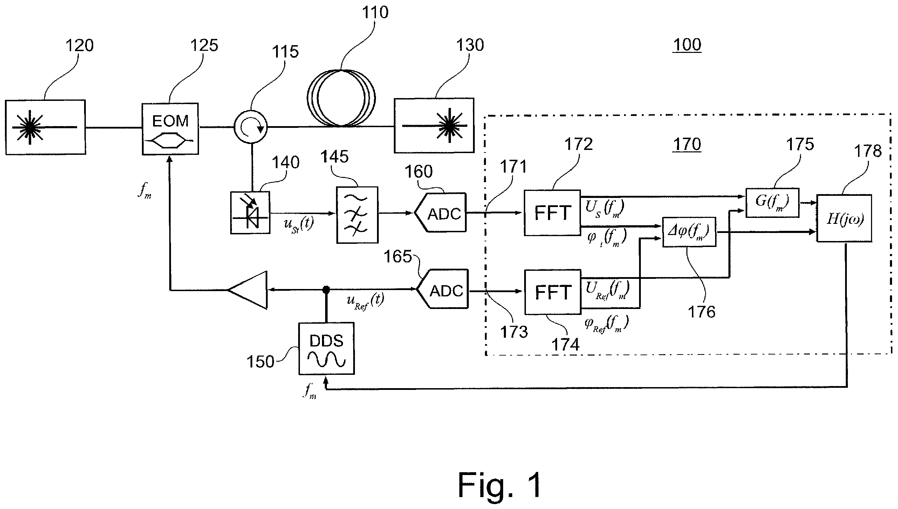

Fig. 1 zeigt eine Vorrichtung 100 gemäß einem Ausführungsbeispiel der vorliegenden Erfindung. Die Vorrichtung 100 ist eingerichtet zur Brillouin-Frequenzbereichsanalyse und umfaßt zumindest eine optische Sensorfaser 100, an deren einem Ende ein Pumplaser 120 und an deren entgegengesetzten Ende ein Stokeslaser 130 angeordnet sind.

Der Stokeslaser 130 ist zum Einkoppeln von eine Stokesfrequenz aufweisendem Laserlicht in die Sensorfaser 110 eingerichtet. Die Pumpfrequenz und die Stokesfrequenz sind voneinander verschieden, wobei der Frequenzunterschied zwischen der Pumpfrequenz und der Stokesfrequenz im Bereich akustischer Phononen in der Sensorfaser liegt. Weiterhin weist die Vorrichtung 100 einen Zirkulator 115 auf, der angepaßt ist, ein optisches Meßsignal aus der Sensorfaser 110 auszukoppeln. Mit dem Zirkulator 115 ist ein optischer Sensor 140, beispielsweise eine Photodiode, verbunden. Mittels Sensor 140 kann das über den Zirkulator 115 ausgekoppelte optische Signal in ein analoges Meßsignal u_{St} umgesetzt werden. Der optische Sensor 140 detektiert die Einhüllende der amplitudenmodulierten Rückstreuung aus der Sensorfaser 110. Mit dem optischen Sensor 140 ist ein erster Analog-Digital-Wandler (A/D-Wandler) 160 verbunden, der das analoge Meßsignal u_{St} in ein digitales Meßsignal umsetzt. Dabei ist die große Bandbreite des Meßsignals zu beachten, die im Bereich von 10 kHz bis zu 30 MHz und noch deutlich darüber liegen kann. Um diese Bandbreiten zu bewältigen weist der erste A/D-Wandler typischerweise eine Abtastrate im Bereich von 100 MHz bis 130 MHz, beispielsweise 125 MHz, auf.

Der Pumplaser 120 ist zum Einkoppeln von eine Pumpfrequenz aufweisendem Laserlicht in die Sensorfaser 110 eingerichtet. Das von Pumplaser 120 bereitgestellte Laserlicht wird durch einen elektrooptischen Modulator (EOM) 125 moduliert. Typischerweise handelt es sich hierbei um eine periodische Modulation des Laserlichts. Dazu wird dem EOM ein Referenzsignal u_{Ref} mit der Modulationsfrequenz fₘ zugeführt. Das Referenzsignal u_{Ref} wird durch eine Einrichtung 150 zur direkten digitalen Synthese (DDS) erzeugt. Die DDS-Einheit 150 ist mit dem EOM 125 verbunden, um das Referenzsignal u_{Ref} an ihn bereitzustellen. Weiterhin ist die DDS-Einheit 150 mit einem zweiten A/D-Wandler 165 verbunden, der das Referenzsignal u_{Ref} in ein digitales Referenzsignal umsetzt. Typischerweise weist der erste A/D-Wandler eine Abtastrate im Bereich von 100 MHz bis 130 MHz, beispielsweise 125 MHz, auf.

Die Vorrichtung 100 zur Brillouin-Frequenzbereichsanalyse umfaßt weiterhin eine Analyseeinheit 170 zum Ermitteln der komplexen Übertragungsfunktion H der Sensorfaser 110. Die Analyseeinheit 170 weist einen digitalen Meßsignaleingang 171 für das digitale Meßsignal und einen digitalen Referenzsignaleingang 173 für das digitale Referenzsignal auf. Der digitale Meßsignaleingang 171 ist dazu mit dem ersten A/D-Wandler 160 verbunden und der digitale Referenzsignaleingang 173 ist dazu mit dem zweiten A/D-Wandler 173 verbunden. Weiterhin ist die Analyseeinheit 170 eingerichtet ist, die komplexe Übertragungsfunktion H der optischen Faser 110 aus dem digitalen Meßsignal und dem digitalen Referenzsignal zu ermitteln. Dazu weist die Analyseeinheit 170 eine Einheit 172 zum Ermitteln des Betrags U_{St} und der Phase ϕ_{St} des Meßsignals auf. Die Einheit 172 umfaßt insbesondere eine Untereinheit, die das über den Eingang 171 erhaltene digitale Meßsignal einer Fast-Fourier-Transformation (FFT) unterzieht. Aus dem fouriertransformierten Meßsignal können Betrag U_{St} und Phase ϕ_{St} bestimmt werden. Die Genauigkeit dieser Extraktion, die der Filterbandbreite im analogen Netzwerkanalysator entspricht, hängt von der Anzahl der Samples pro Kanal sowie von der Abtastfrequenz des ersten A/D-Wandlers 160 ab. Weiterhin weist die Analyseeinheit 170 eine Einheit 174 zum Ermitteln des Betrags u_{Ref} und der Phase ϕ_{Ref} des Referenzsignals auf. Die Genauigkeit dieser Extraktion hängt selbstverständlich ebenfalls von der Anzahl der Samples pro Kanal sowie von der Abtastfrequenz des zweiten A/D-Wandlers 165 ab. Die Einheit 174 umfaßt insbesondere eine Untereinheit, die das über den Eingang 173 erhaltene digitale Referenzsignal einer FFT unterzieht. Aus dem fouriertransformierten Meßsignal können Betrag u_{Ref} und Phase ϕ_{Ref} bestimmt werden. Die Analyseeinheit 170 umfaßt weiterhin eine Einheit 175 zum Ermitteln des Verhältnisses G zwischen dem Betrag U_{St} des Meßsignals und dem Betrag U_{Ref} des Referenzsignals. Dazu ist die Einheit 175 jeweils mit der Einheit 172 zum Ermitteln des Betrags U_{St} des Meßsignals und der Einheit 174 zum Ermitteln des Betrags u_{Ref} des Referenzsignals verbunden. Der Betrag U_{St} des Meßsignals wird von Einheit 172 und der Betrag U_{Ref} des Referenzsignals wird von Einheit 174 an Einheit 175 zum Ermitteln des Verhältnisses G bereitgestellt. Weiterhin umfaßt die Analyseeinheit 170 eine Einheit 176 zum Ermitteln einer Phasendifferenz Δϕ zwischen der Phase ϕ_{St} des Meßsignals und der Phase ϕ_{Ref} des Referenzsignals. Dazu ist die Einheit 175 jeweils mit der Einheit 172 zum Ermitteln der Phase ϕ_{St} des Meßsignals und der Einheit 174 zum Ermitteln der Phase ϕ_{Ref} des Referenzsignals verbunden. Die Phase ϕ_{St} des Meßsignals wird von Einheit 172 und die Phase ϕ_{Ref} des Referenzsignals wird von Einheit 174 an die Einheit 176 zum Ermitteln der Phasendifferenz Δϕ bereitgestellt. Schließlich weist die Analyseeinheit 170 eine Einheit 178 zum Ermitteln der komplexen Übertragungsfunktion H aus dem Verhältnis G zwischen dem Betrag U_{St} des Meßsignals und dem Betrag u_{Ref} des Referenzsignals und der Phasendifferenz Δϕ zwischen der Phase ϕ_{St} des Meßsignals und der Phase ϕ_{Ref} des Referenzsignals auf.

Auf die oben beschriebene Weise ist die Analyseeinheit 170 eingerichtet, um aus dem digitalen Meßsignal und dem digitalen Referenzsignal die Übertragungsfunktion H der Sensorfaser zu bestimmen. Da die Brillouinfrequenzverschiebung deutlich von der Dehnung der optischen Faser 110 und weniger deutlich von der Temperatur abhängt, läßt sich aus der Übertragungsfunktion ein ortsaufgelöstes Dehnungs- und Temperaturprofil der Faser ableiten.

Weiterhin werden die digitalen Signale auch gepuffert und können dann offline verarbeitet werden.

Dies entbindet von den Einschränkungen der analogen Echtzeit-Signalverarbeitung wie etwa der begrenzten Steilheit von kausalen Filtern oder dem suboptimalen Phasengang bei vorgegebenem Frequenzgang. Gemäß einem Ausführungsbeispiel ist zwischen dem ersten Analog-Digital-Wandler 160 und dem digitalen Meßsignaleingang 171 ein Datenpuffer nicht gezeigt bereitgestellt. Beispielsweise kann der Datenpuffer als Field Programmable Gate Array (FPGA) Puffer oder als First In-First Out (FIFO) Puffer ausgebildet sein. Gleichermaßen kann zwischen dem zweiten Analog-Digital-Wandler 165 und dem digitalen Referenzsignaleingang 173 ein Datenpuffer, beispielsweise ein FPGA-Puffer oder ein FIFO-Puffer ausgebildet sein. Auf diese Weise können die Daten zunächst vor der Weiterverarbeitung in der Analyseeinheit 170 zwischengespeichert werden. Jedoch ist es wünschenswert, die am Ausgang der A/D-Wandler 160, 165 anliegenden parallelen Datenströme so schnell wie möglich der Analyseeinheit 170 zur Verfügung zu stellen. Dazu kann gemäß einer Ausführungsform eine USB-Schnittstelle bereitgestellt sein.

Gemäß einer Weiterbildung der vorliegenden Erfindung ist weiterhin ein Tiefpaßfilter 145 zwischen den optischen Sensor 140 und den digitalen Meßsignaleingang 171 der Analyseeinheit 170 geschaltet. Das Tiefpaßfilter 145 ist typischerweise als passives Anti-Aliasing-Filter ausgelegt, wobei das Tiefpaßfilter 145 eine Grenzfrequenz im Bereich von 30 MHz bis 50 MHz aufweisen kann. Gemäß einer alternativen Ausführungsform ist das Tiefpaßfilter 145 als adaptives aktives Filter ausgebildet. Selbstverständlich kann auch zwischen die DDS-Einheit 150 und den zweiten A/D-Wandler 165 ein Anti-Aliasing-Filter zwischengeschaltet werden. Jedoch erhält der zweite A/D-Wandler das das Referenzsignal direkt aus der DDS-Einheit 150, so daß es sich um ein sauberes bandbegrenztes Sinussignal handelt. Daher dürfte in den meisten Fällen ein Anti-Aliasing-Filter zwischen DDS-Einheit 150 und dem zweiten A/D-Wandler 165 nicht erforderlich sein.

Durch die digitale Signalauswertung kann die Dynamik des Systems deutlich verbessert werden. Insbesondere kann bei der Signalauswertung auf analoge Filter und Phasen- sowie Amplitudenvergleicher verzichtet werden. Durch die Verwendung eines Zirkulators, der die gesamte Leistung des rückgestreuten Lichts zum Photodetektor führt, anstatt eines optischen Kopplers kann die Dynamik des Systems weiter verbessert werden. Weiterhin kann die Meßdauer verkürzt werden, da das Einschwingen der analogen Filter entfällt. Weiterhin können die digitalen Signale auch offline verarbeitet werden, da die auf die Gesetze der analogen Echtzeit-Signalverarbeitung keine Rücksicht genommen werden muß. Weiterhin entfällt aufgrund der digitalen Verarbeitung die Notwendigkeit, einen VNA einzusetzen, was mit einer erheblichen Reduzierung von Kosten und Gewicht des Systems verbunden ist. Da das Referenzsignal direkt von einer digitalen Signalquelle bezogen werden kann, kann auf die in herkömmlichen Systemen auf der Pumpseite vorhandene Photodiode verzichtet werden. Dies bringt eine weitere Ersparnis in Gewicht, Kosten und Stromverbrauch mit sich.

Es ist allerdings darauf hinzuweisen, daß im analogen Verfahren der Netzwerkanalysator seine Signale von zwei Photodioden erhält, wodurch ein direkter Vergleich der beiden Signale an der Ebene des Analysators möglich ist, da das Referenzsignal dieselben Einflüsse im Modulator und im Detektor erfahren hat wie das Meßsignal. Bei dem oben geschilderten Ansatz wird jedoch auf die pumpseitige Photodiode verzichtet. Anstatt wird das elektrische Modulationssignal der DDS-Einheit 150 direkt als Referenzsignal verwendet. In diesem Fall müssen die Übertragungsfunktionen aller Komponenten im Pfad des Meßsignals, die nicht zur Sensorstrecke gehören, genau bestimmt und herausgerechnet werden.

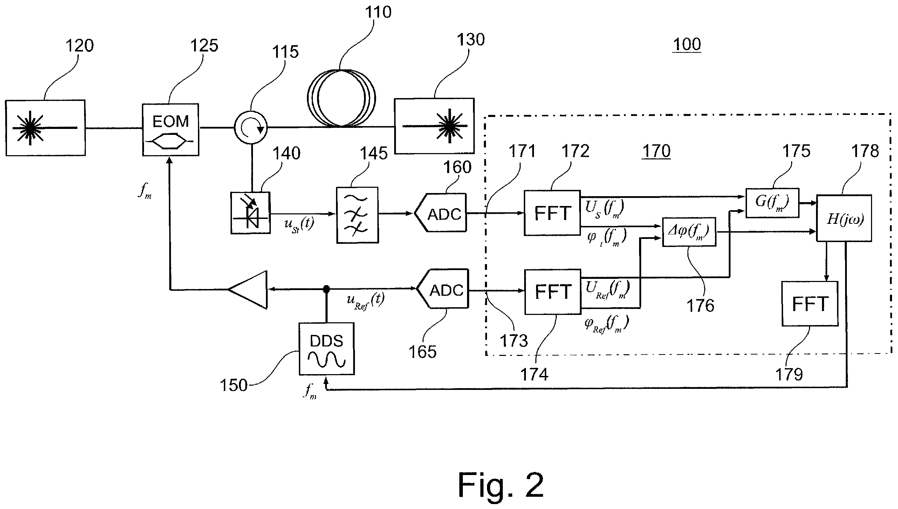

Fig. 2 zeigt eine Vorrichtung gemäß einem weiteren Ausführungsbeispiel der vorliegenden Erfindung, wobei die Vorrichtung in ihrem Aufbau im wesentlichen der in Fig. 1 gezeigten Vorrichtung gleicht. Jedoch umfaßt die Analyseeinheit 170 der Vorrichtung weiterhin eine Einheit 179 zum Ermitteln einer Impulsantwort aus der komplexen Übertragungsfunktion H. Typischerweise ist dazu die Einheit 179 ausgelegt, die komplexe Übertragungsfunktion einer Fourier-Transformation, insbesondere einer FFT, zu unterziehen. Es ist aus dem Stand der Technik bekannt, wie auf diese Weise aus der komplexen Übertragungsfunktion die Impulsantwort der Sensorfaser 110 erhalten werden kann.

Bei allen oben beschriebenen Ausführungsbeispielen kann die Analyseeinheit 170 beispielsweise als digitaler Signalprozessor (DSP) ausgeführt werden. Bei der Implementierung der Analyseeinheit 170 auf einem DSP könnte weiterhin die Erzeugung des analogen Referenzsignals und seine anschließende Digitalisierung mittels des zweiten A/D-Wandlers 165 übersprungen werden. In diesem Fall könnte das digitale Referenzsignal direkt in Analyseeinheit 170 erzeugt werden. Dabei muß allerdings eine feste Phasenbeziehung zwischen dem digitalen Referenzsignal und dem aufgenommenen Meßsignal garantiert werden.

Gemäß einer Weiterbildung der Erfindung, die in allen hierin beschriebenen Ausführungsformen angewandt werden kann, umfaßt die Vorrichtung 100 weiterhin einen mit dem optischen Sensor 140 verbundenen Verstärker (nicht gezeigt). Der Verstärker ist zum Verstärken des Meßsignals eingerichtet und kann beispielsweise als regelbarer Verstärker ausgebildet sein. Gemäß einem Ausführungsbeispiel ist der Verstärker so eingerichtet, daß er das Meßsignal auf einen im wesentlichen konstanten Pegel verstärkt. Auf diese Weise kann die Dynamik des Systems kann erhöht werden, indem das Meßsignal, das bei hohen Modulationsfrequenzen sehr schwach und verrauscht sein kann, auf einen konstanten Pegel verstärkt wird. Der regelbare Verstärker kann beispielsweise über die Analyseeinheit 170 angesteuert werden.

Die in den obigen Ausführungsbeispielen beschriebenen Einheit können additiv oder alternativ wahlweise schaltungstechnisch oder per Software implementiert sein. Dabei können je nach Anwendung beide Formen der Implementation realisiert werden.

Gemäß einer Ausführungsform umfaßt ein Verfahren zur digitalen Brillouin-Frequenzbereichsanalyse das Bereitstellen eines digitalen Meßsignals, das aus einem optischen Meßignal einer stimulierten Brillouinstreuung gewonnen wurde. Weiterhin wird ein digitales Referenzsignals bereitgestellt, wobei die komplexe Übertragungsfunktion einer Sensorfaser aus dem digitalen Meßsignal und dem digitalen Referenzsignal ermittelt wird. Gemäß einem Ausführungsbeispiel kann dabei ein analoges Meßsignal in das digitale Meßsignal gewandelt und ein analoges Referenzsignal in das digitale Referenzsignal gewandelt werden. Dabei kann gemäß einer Weiterbildung das analoge Meßsignal vor der Wandlung auf einen im wesentlichen konstanten Pegel verstärkt werden. Weiterhin kann gemäß einem anderen optionalen Merkmal das analoge Meßsignal vor der Wandlung tiefpaßgefiltert werden, um eine Anti-Aliasing-Filterung zu erreichen. Gemäß einem alternativen Ausführungsbeispiel kann ein analoges Meßsignal in das digitale Meßsignal gewandelt werden, das digitale Referenzsignal jedoch ohne vorherige Wandlung direkt für die Auswertung bereitgestellt werden. In beiden Fällen kann das Referenzsignal mittels direkter digitaler Synthese erzeugt werden. Typischerweise werden das analoge Meßsignal und/oder das analoge Referenzsignal mit einer Abtastrate im Bereich von 100 MHz bis 130 MHz in das digitale Meßsignal und/oder das digitale Referenzsignal umgesetzt. Vor der digitalen Weiterverarbeitung können das digitale Meßsignal und/oder das digitale Referenzsignal vor zwischengepuffert werden. Aus dem digitalen Meßsignal und dem digitalen Referenzsignal werden weiterhin Betrag und die Phase ermittelt. Typischerweise erfolgt dazu zunächst eine Fourier-Transformation, beispielsweise per FFT, des digitalen Meßsignals oder des digitalen Referenzsignals. Anschließend wird das Verhältnis zwischen dem Betrag des Meßsignals und dem Betrag des Referenzsignals ermittelt. Weiterhin wird die Phasendifferenz zwischen der Phase des Meßsignals und der Phase des Referenzsignals ermittelt. Aus dem so ermittelten Verhältnis zwischen dem Betrag des Meßsignals und dem Betrag des Referenzsignals sowie der Phasendifferenz zwischen der Phase des Meßsignals und der Phase des Referenzsignals kann anschließend die komplexe Übertragungsfunktion der Sensorfaser bestimmt werden. Optional kann durch fouriertransformieren der komplexen Übertragungsfunktion eine Impulsantwort der Sensorfaser ermittelt werden.

Fig. 4 zeigt das Ergebnis einer Dehnungsmessung an einer optischen Faser mit definierter Vordehnung. Dabei wurden in eine Standard-Monomodenfaser des Typs SMF-28e der Firma Corning gezielt Bereiche hoher Dehnung eingebracht. Die eingebrachte Dehnung ist durch die strichpunktierte Linie dargestellt. Während der Messung wurde der Pumpstrahl mit Modulationsfrequenzen fₘ im Bereich von 100 kHz bis 30 MHz moduliert, was einer Ortsauflösung von 3 m entspricht. Wie aus Fig. 4 hervorgeht, wurde eine hervorragende Auflösung selbst des kürzesten vorgedehnten Bereichs, der nur 5 m lang war, erzielt.

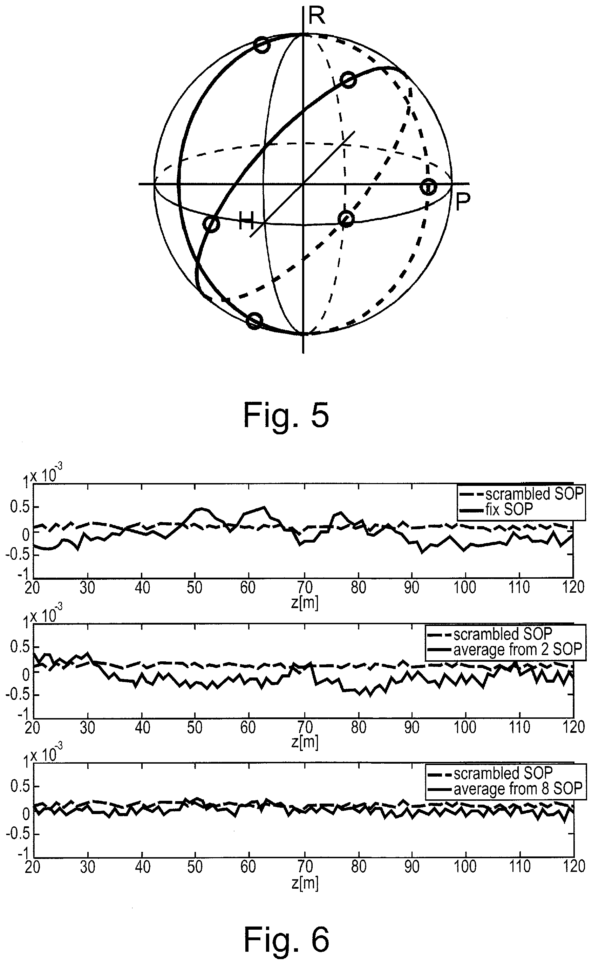

Ein weiterer Aspekt der vorliegenden Erfindung betrifft die Abhängigkeit der Brillouinverstärkung g_{B} von den Polarisationszuständen der Pumpwelle und der Stokeswelle. Es ist bekannt, daß die Brillouinverstärkung g_{B} bei linearer Polarisation maximal ist für parallel und minimal ist für entgegengesetzte Polarisationszustände. Ebenfalls ist bekannt, daß die Brillouinverstärkung g_{B} bei zirkularer Polarisation maximal ist für gleichsinnige drehende und minimal ist für entgegengesetzt drehende Polarisationszustände. Da sowohl die Pumpwelle als auch die Stokeswelle ihre Polarisationszustände während ihrer jeweiligen Ausbreitung in der optische Faser ändern, wird die die Brillouinverstärkung g_{B} entlang der optischen Faser variieren. Bislang wurde daher der Polarisationszustand einer der beiden Wellen verwürfelt, um eine Mittelung zu erhalten. Gemäß einer Ausführungsform kann jedoch eine Mittelung über eine geringe Anzahl von Polarisationszuständen das Verwürfeln ersetzen. Beispielsweise kann über einen linearen, einen zirkularen und einen daraus gebildeten 45°-Zustand gemittelt werden. Fig. 5 zeigt die Poincare-Sphäre mit den Kreisen, entlang derer die drei Polarisationszustände des Stokesstrahls rotiert werden. Die drei Punkte H, R und P zeigen dabei eine mögliche Auswahl für die Polarisationszustände an. Die entsprechenden Polarisationszustände können beispielsweise mittels eines automatischen Polarisationsreglers eingestellt werden.

Fig. 6 zeigt einen jeweiligen Vergleich von Messungen mit einem festen Polarisationszustand sowie zwei gemittelten Polarisationszuständen mit verwürfelten Polarisationszuständen. Darin ist zu sehen, daß die Fluktuation der Brillouinverstärkung bei einem festen Polarisationszustand relativ groß ist und auch bei Mittelung zweier orthogonaler Polarisationszustände nur mäßig abnimmt. Allerdings bringt die Mittelung über acht verschiedene Polarisationszustände ein gutes Ergebnis, das nur wenig von der verwürfelten Messung abweicht. Auf diese Weise kann auf das Verwürfeln verzichtet werden, was zu einer deutlichen Verkürzung der Meßzeiten führt.

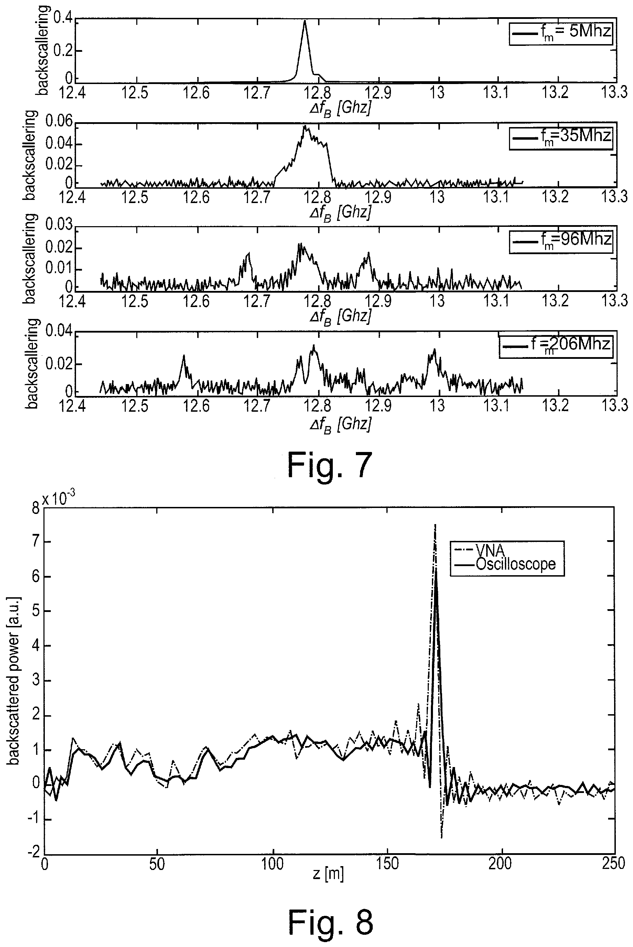

Fig. 7 zeigt eine Messung des Brillouinspektrums an einer 2250 m langen Faser bei verschiedenen Modulationsfrequenzen. Darin ist erkennbar, daß das Signal bei höheren Modulationsfrequenzen deutlich schwächer ist und sich dementsprechend das Signal-RauschVerhältnis für höhere Modulationsfrequenzen verschlechtert.

Fig. 8 zeigt einen Vergleich einer analogen Messung und einer digitalen Verarbeitung. Darin ist die räumlich aufgelöste Messung der Brillouinverstärkung g_{B} für einen 177 m langen Abschnitt einer optischen Faser dargestellt. Die gestrichelte Kurve wurde mittels eines VNA aufgenommen, wohingegen die durchgehende Kurve das Ergebnis der oben beschriebenen digitalen Verarbeitung ist. Dafür wurden Modulationsfrequenzen zwischen 100 kHz und 30 MHz mit 2500 Samples, die jeweils 20 Zyklen pro Frequenz umfassen, aufgenommen.

Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Vorrichtung (100) eingerichtet zur Brillouin-Frequenzbereichsanalyse, umfassend eine Analyseeinheit (170) zum Ermitteln der komplexen Übertragungsfunktion (H) einer Sensorfaser (110), wobei die Analyseeinheit (170) aufweist:
- einen digitalen Meßsignaleingang (171) für ein digitales Meßsignal,
- einen digitalen Referenzsignaleingang (173) für ein digitales Referenzsignal, und wobei die Vorrichtung (100) weiterhin
- zumindest eine optische Sensorfaser (110),
- einen Pumplaser (120), und
- einen Stokeslaser (130) umfasst, wobei der Pumplaser (120) an einem Ende der zumindest einen optischen Sensorfaser (100) und der Stokeslaser (130) an einem entgegengesetzten Ende der zumindest einen optischen Sensorfaser (110) angeordnet sind, und
wobei die Analyseeinheit (170) eingerichtet ist, die komplexe Übertragungsfunktion (H) aus dem digitalen Meßsignal und dem digitalen Referenzsignal zu ermitteln, weiterhin umfassend einen ersten, mit dem digitalen Meßsignaleingang (171) verbundenen Analog-Digital-Wandler (160), der zur Umwandlung eines analogen Meßsignals (u_{St}) in ein digitales Meßsignal eingerichtet ist und/oder einen zweiten, mit dem digitalen Referenzsignaleingang (173) verbundenen Analog-Digital-Wandler (165), der zur Umwandlung eines analogen Referenzsignals (u_{Ref}) in ein digitales Meßsignal eingerichtet ist, wobei zwischen dem ersten Analog-Digital-Wandler (160) und dem digitalen Meßsignaleingang (171) und/oder zwischen dem zweiten Analog-Digital-Wandler (165) und dem digitalen Referenzsignaleingang (173) ein Datenpuffer bereitgestellt ist.

2. Vorrichtung nach Anspruch 1, wobei der erste und/oder der zweite Analog-Digital-Wandler (160, 165) eine Abtastrate im Bereich von 100 MHz bis 130 MHz aufweisen.

3. Vorrichtung nach einem der vorhergehenden Ansprüche, weiterhin umfassend eine Einrichtung (150) zur direkten digitalen Synthese des Referenzsignals, wobei die Einrichtung (150) einem analogen Eingang des zweiten Analog-DigitalWandlers (165) verbunden ist.

4. Vorrichtung nach Anspruch 3, wobei die Einrichtung zur direkten digitalen Synthese des Referenzsignals weiterhin mit einem elektrooptischen Modulator (125) zur Modulation von Laserlicht eines Pumplasers (120) verbunden ist.

5. Vorrichtung nach einem der vorhergehenden Ansprüche, weiterhin umfassend einen optischen Sensor (140) zum Erfassen eines optischen Meßsignals einer stimulierten Brillouinstreuung, wobei der optische Sensor mit dem digitalen Meßsignaleingang (171) der Analyseeinheit (170) verbunden ist.

6. Vorrichtung nach einem der vorhergehenden Ansprüche, wobei die Analyseeinheit (170) eine Einheit (172) zum Ermitteln des Betrags (U_{St}) und der Phase (ϕ_{St}) des Meßsignals, eine Einheit (174) zum Ermitteln des Betrags (U_{Ref}) und der Phase (ϕ_{Ref}) des Referenzsignals, eine Einheit (175) zum Ermitteln des Verhältnisses (G) zwischen dem Betrag (U_{St}) des Meßsignals und dem Betrag (U_{Ref}) des Referenzsignals sowie eine Einheit (176) zum Ermitteln einer Phasendifferenz (Δϕ) zwischen der Phase (ϕ_{St}) des Meßsignals und der Phase (ϕ_{Ref}) des Referenzsignals aufweist, und wobei die Analyseeinheit (170) weiterhin eine Einheit (178) zum Ermitteln der komplexen Übertragungsfunktion (H) aus dem Verhältnis (G) zwischen dem Betrag (U_{St}) des Meßsignals und dem Betrag (U_{Ref}) des Referenzsignals und der Phasendifferenz (Δϕ) zwischen der Phase (ϕ_{St}) des Meßsignals und der Phase (ϕ_{Ref}) des Referenzsignals aufweist.

7. Vorrichtung nach einem der vorhergehenden Ansprüche, weiterhin umfassend einen mit dem optischen Sensor verbundenen Verstärker, der zum Verstärken des Meßsignals eingerichtet ist, wobei der Verstärker als regelbarer Verstärker ausgebildet und so eingerichtet ist, daß er das Meßsignal auf einen im wesentlichen konstanten Pegel verstärkt.

8. Vorrichtung nach einem der vorhergehenden Ansprüche, weiterhin umfassend einen Zirkulator (115) zum Auskoppeln eines optischen Meßsignals aus der Sensorfaser (110).

9. Verfahren zur digitalen Brillouin-Frequenzbereichsanalyse, umfassend die Schritte:
(a) Bereitstellen einer Analyseeinheit (170) zum Ermitteln der komplexen Übertragungsfunktion (H) einer Sensorfaser (110), wobei die Analyseeinheit (170) aufweist:
- einen digitalen Meßsignaleingang (171) für ein digitales Meßsignal,
- einen digitalen Referenzsignaleingang (173) für ein digitales Referenzsignal, und wobei weiterhin
- zumindest eine optische Sensorfaser (110)
- ein Pumplaser (120), und
- ein Stokeslaser (130) vorgesehen sind, wobei die Analyseeinheit (170) eingerichtet ist, die komplexe Übertragungsfunktion (H) aus dem digitalen Meßsignal und dem digitalen Referenzsignal zu ermitteln, weiterhin umfassend
- einen ersten, mit dem digitalen Meßsignaleingang (171) verbundenen Analog-Digital-Wandler (160), der zur Umwandlung eines analogen Meßsignals (u_{St}) in ein digitales Meßsignal eingerichtet ist und/oder
- einen zweiten, mit dem digitalen Referenzsignaleingang (173) verbundenen Analog-Digital-Wandler (165), der zur Umwandlung eines analogen Referenzsignals (u_{Ref}) in ein digitales Meßsignal eingerichtet ist;
(b) Anordnen des Pumplasers (120) an einem Ende der zumindest einen optischen Sensorfaser (110) und des Stokeslasers (130) an einem entgegengesetzten Ende der zumindest einen optischen Sensorfaser (110);
(c) Bereitstellen eines digitalen Meßsignals, das aus einem optischen Meßsignal einer in der optischen Sensorfaser (110) stimulierten Brillouinstreuung gewonnen wurde,
(d) Bereitstellen eines digitalen Referenzsignals, und
(e) Ermitteln der komplexen Übertragungsfunktion der Sensorfaser aus dem digitalen Meßsignal und dem digitalen Referenzsignal, wobei weiterhin der Betrag und die Phase des digitalen Meßsignals und weiterhin der Betrag und die Phase des digitalen Referenzsignals sowie das Verhältnis zwischen dem Betrag des Meßsignals und dem Betrag des Referenzsignals und eine Phasendifferenz zwischen der Phase des Meßsignals und der Phase des Referenzsignals ermittelt werden, und anschließend die komplexe Übertragungsfunktion aus dem Verhältnis zwischen dem Betrag des Meßsignals und dem Betrag des Referenzsignals sowie der Phasendifferenz zwischen der Phase des Meßsignals und der Phase des Referenzsignals ermittelt wird,
wobei das analoge Meßsignal auf einen im wesentlichen konstanten Pegel verstärkt wird und das digitale Meßsignal und/oder das digitale Referenzsignal vor Schritt (e) zwischengepuffert werden.

10. Verfahren nach Anspruch 9, wobei das Referenzsignal mittels direkter digitaler Synthese erzeugt wird.

## Claims

1. Apparatus (100) designed for Brillouin frequency range analysis, comprising an analysis unit (170) for determining the complex transfer function (H) of a sensor fibre (110), wherein the analysis unit (170) comprises:
- a digital measuring signal input (171) for a digital measuring signal,
- a digital reference signal input (173) for a digital reference signal,
and wherein the apparatus (100) further comprises
- at least one optical sensor fibre (110),
- a pump laser (120), and
- a Stokes laser (130),
wherein the pump laser (120) is arranged at one end of the at least one optical sensor fibre (100) and the Stokes laser is arranged (130) at an opposite end of the at least one optical sensor fibre (110), and
wherein the analysis unit (170) is designed to determine the complex transfer function (H) from the digital measuring signal and the digital reference signal, further comprising a first analogue-digital converter (160), which is connected to the digital measuring signal input (171) and is designed to convert an analogue measuring signal (u_{St}) into a digital measuring signal, and/or a second analogue-digital converter (165), which is connected to the digital reference signal input (173) and is designed to convert an analogue reference signal (u_{Ref}) into a digital measuring signal, wherein a data buffer is provided between the first analogue-digital converter (160) and the digital measuring signal input (171) and/or between the second analogue-digital converter (165) and the digital reference signal input (173).

2. Apparatus according to claim 1, wherein the first and/or the second analogue-digital converter (160, 165) have a sampling rate in the range of from 100 MHz to 130 MHz.

3. Apparatus according to either of the preceding claims, further comprising a device (150) for directly digitally synthesising the reference signal, wherein the device (150) is connected to an analogue input of the second analogue-digital converter (165).

4. Apparatus according to claim 3, wherein the device for directly digitally synthesising the reference signal is furthermore connected to an electrooptical modulator (125) for modulating laser light from a pump laser (120).

5. Apparatus according to any of the preceding claims, further comprising an optical sensor (140) for detecting an optical measuring signal from an instance of stimulated Brillouin scattering, wherein the optical sensor is connected to the digital measuring signal input (171) of the analysis unit (170).

6. Apparatus according to any of the preceding claims, wherein the analysis unit (170) comprises a unit (172) for determining the magnitude (U_{St}) and the phase (ϕ_{St}) of the measuring signal, a unit (174) for determining the magnitude (U_{Ref}) and the phase (ϕ_{Ref}) of the reference signal, a unit (175) for determining the ratio (G) between the magnitude (U_{St}) of the measuring signal and the magnitude (U_{Ref}) of the reference signal and a unit (176) for determining a phase difference (Δϕ) between the phase (ϕ_{St}) of the measuring signal and the phase (ϕ_{Ref}) of the reference signal, and wherein the analysis unit (170) further comprises a unit (178) for determining the complex transfer function (H) from the ratio (G) between the magnitude (U_{St}) of the measuring signal and the magnitude (U_{Ref}) of the reference signal and from the phase difference (Δϕ) between the phase (ϕ_{St}) of the measuring signal and the phase (ϕ_{Ref}) of the reference signal.

7. Apparatus according to any of the preceding claims, further comprising an amplifier that is connected to the optical sensor and is designed to amplify the measuring signal, wherein the amplifier is a variable amplifier and is therefore designed such that it amplifies the measuring signal to a substantially constant level.

8. Apparatus according to any of the preceding claims, further comprising a circulator (115) for decoupling an optical measuring signal from the sensor fibre (110).

9. Method for digital Brillouin frequency range analysis, comprising the steps of:
(a) providing an analysis unit (170) for determining the complex transfer function (H) of a sensor fibre (110), wherein the analysis unit (170) comprises:
- a digital measuring signal input (171) for a digital measuring signal,
- a digital reference signal input (173) for a digital reference signal,
and wherein furthermore
- at least one optical sensor fibre (110),
- a pump laser (120), and
- a Stokes laser (130) are provided,
wherein the analysis unit (170) is designed to determine the complex transfer function (H) from the digital measuring signal and the digital reference signal, further comprising:
- a first analogue-digital converter (160), which is connected to the digital measuring signal input (171) and is designed to convert an analogue measuring signal (u_{St}) into a digital measuring signal, and/or
- a second analogue-digital converter (165), which is connected to the digital reference signal input (173) and is designed to convert an analogue reference signal (u_{Ref}) into a digital measuring signal;
(b) arranging the pump laser (120) at one end of the at least one optical sensor fibre (110) and the Stokes laser (130) at an opposite end of the at least one optical sensor fibre (110);
(c) providing a digital measuring signal that was obtained from an optical measuring signal from an instance of Brillouin scattering stimulated in the optical sensor fibre (110),
(d) providing a digital reference signal, and
(e) determining the complex transfer function of the sensor fibre from the digital measuring signal and the digital reference signal, wherein furthermore the magnitude and the phase of the digital measuring signal and furthermore the magnitude and the phase of the digital reference signal and the ratio between the magnitude of the measuring signal and the magnitude of the reference signal and a phase difference between the phase of the measuring signal and the phase of the reference signal are determined, and subsequently the complex transfer function is determined from the ratio between the magnitude of the measuring signal and the magnitude of the reference signal and from the phase difference between the phase of the measuring signal and the phase of the reference signal,
wherein the analogue measuring signal is amplified to a substantially constant level and the digital measuring signal and/or the digital reference signal are buffered before step (e).

10. Method according to claim 9, wherein the reference signal is generated by means of direct digital synthesis.

## Revendications

1. Dispositif (100) agencé pour l'analyse de domaines de fréquences Brillouin, comprenant une unité d'analyse (170) pour la détermination de la fonction de transfert complexe (H) d'une fibre capteur (110), où l'unité d'analyse (170) présente :
- une entrée de signal de mesure numérique (171) pour un signal de mesure numérique,
- une entrée de signal de référence numérique (173) pour un signal de référence numérique,
et où le dispositif (100) comprend en outre
- au moins une fibre capteur optique (110),
- un laser pompe (120), et
- un laser Stokes (130),
où le laser pompe (120) est disposé à une extrémité de la au moins une fibre capteur optique (100) et le laser Stokes (130) est disposé à une extrémité opposée de la au moins une fibre capteur optique (110), et
où l'unité d'analyse (170) est agencée pour déterminer la fonction de transfert complexe (H) à partir du signal de mesure numérique et du signal de référence numérique, comprenant en outre un premier convertisseur analogique-numérique (160) relié à l'entrée de signal de mesure numérique (171), qui est agencé pour la conversion d'un signal de mesure analogique (u_{St}) en un signal de mesure numérique et/ou un second convertisseur analogique-numérique (165) relié à l'entrée de signal de référence numérique (173), qui est agencé pour la conversion d'un signal de référence analogique (u_{Ref}) en un signal de mesure numérique, où une mémoire tampon de données est prévue entre le premier convertisseur analogique-numérique (160) et l'entrée de signal de mesure numérique (171) et/ou entre le second convertisseur analogique-numérique (165) et l'entrée de signal de référence numérique (173).

2. Dispositif selon la revendication 1, où le premier et/ou le second convertisseur analogique-numérique (160, 165) présentent une fréquence d'échantillonnage dans le domaine de 100 MHz à 130 MHz.

3. Dispositif selon l'une des revendications précédentes, comprenant en outre une installation (150) pour la synthèse numérique directe du signal de référence, où l'installation (150) est reliée à une entrée analogique du second convertisseur analogique-numérique (165).

4. Dispositif selon la revendication 3, où l'installation pour la synthèse numérique directe du signal de référence est reliée en outre à un modulateur électro-optique (125) pour la modulation de la lumière laser d'un laser pompe (120).

5. Dispositif selon l'une des revendications précédentes, comprenant en outre un capteur optique (140) pour acquérir un signal de mesure optique d'une diffusion Brillouin stimulée, où le capteur optique est relié à l'entrée de signal de mesure numérique (171) de l'unité d'analyse (170).

6. Dispositif selon l'une des revendications précédentes, où l'unité d'analyse (170) présente une unité (172) pour déterminer la valeur (U_{St}) et la phase (ϕ_{St}) du signal de mesure, une unité (174) pour déterminer la valeur (U_{Ref}) et la phase (ϕ_{Ref}) du signal de référence, une unité (175) pour déterminer le rapport (G) entre la valeur (U_{St}) du signal de mesure et la valeur (U_{Ref}) du signal de référence ainsi qu'une unité (176) pour déterminer une différence de phase (Δϕ) entre la phase (ϕ_{St}) du signal de mesure et la phase (ϕ_{Ref}) du signal de référence, et où l'unité d'analyse (170) présente en outre une unité (178) pour déterminer la fonction de transfert complexe (H) à partir du rapport (G) entre la valeur (U_{St}) du signal de mesure et la valeur (U_{Ref}) du signal de référence et de la différence de phase (Δϕ) entre la phase (ϕ_{St}) du signal de mesure et la phase (ϕ_{Ref}) du signal de référence.

7. Dispositif selon l'une des revendications précédentes, comprenant en outre un amplificateur relié au capteur optique, qui est agencé pour amplifier le signal de mesure, où l'amplificateur est formé sous forme d'amplificateur réglable et est agencé de telle manière qu'il amplifie le signal de mesure à un niveau sensiblement constant.

8. Dispositif selon l'une des revendications précédentes, comprenant en outre un circulateur (115) pour le découplage d'un signal de mesure optique provenant de la fibre capteur (110).

9. Procédé pour l'analyse de domaines de fréquences Brillouin numérique, comprenant les étapes :
(a) fourniture d'une unité d'analyse (170) pour la détermination de la fonction de transfert complexe (H) d'une fibre capteur (110), où l'unité d'analyse (170) présente :
- une entrée de signal de mesure numérique (171) pour un signal de mesure numérique,
- une entrée de signal de référence numérique (173) pour un signal de référence numérique,
et où il est prévu en outre
- au moins une fibre capteur optique (110),
- un laser pompe (120), et
- un laser Stokes (130),
où l'unité d'analyse (170) est agencée pour déterminer la fonction de transfert complexe (H) à partir du signal de mesure numérique et du signal de référence numérique, comprenant en outre
- un premier convertisseur analogique-numérique (160) relié à l'entrée de signal de mesure numérique (171), qui est agencé pour la conversion d'un signal de mesure analogique (u_{St}) en un signal de mesure numérique et/ou
- un second convertisseur analogique-numérique (165) relié à l'entrée de signal de référence numérique (173), qui est agencé pour la conversion d'un signal de référence analogique (u_{Ref}) en un signal de mesure numérique ;
(b) disposition du laser pompe (120) à une extrémité de la au moins une fibre capteur optique (110) et du laser Stokes (130) à une extrémité opposée de la au moins une fibre capteur optique (110) ;
(c) fourniture d'un signal de mesure numérique, qui a été obtenu à partir d'un signal de mesure optique d'une diffusion Brillouin stimulée dans la fibre capteur optique (110),
(d) fourniture d'un signal de référence numérique, et
(e) détermination de la fonction de transfert complexe de la fibre capteur à partir du signal de mesure numérique et du signal de référence numérique, où en outre la valeur et la phase du signal de mesure numérique et en outre la valeur et la phase du signal de référence numérique ainsi que le rapport entre la valeur du signal de mesure et la valeur du signal de référence et une différence de phase entre la phase du signal de mesure et la phase du signal de référence sont déterminés, et ensuite la fonction de transfert complexe est déterminée à partir du rapport entre la valeur du signal de mesure et la valeur du signal de référence ainsi que de la différence de phase entre la phase du signal de mesure et la phase du signal de référence,
où le signal de mesure analogique est amplifié à un niveau sensiblement constant et le signal de mesure numérique et/ou le signal de référence numérique sont soumis à une mémorisation tampon intermédiaire avant l'étape (e).

10. Procédé selon la revendication 9, où le signal de référence est produit au moyen d'une synthèse numérique directe.
